# EUROPEAN PATENT APPLICATION

(11) **EP 2 150 029 A1**
(43) Date of publication of application: **03.02.2010**
(21) Application number: 08104932.2
(22) Date of filing: 31.07.2008
(51) Int. Cl.: H04L 29/12

(54) **Method and device for data processing and communication system comprising such device**

(71) Applicant: Nokia Siemens Networks OY, 02610 Espoo (FI)
(72) Inventor: Bahls, Thomas, 17489, Greifswald (DE); Duchow, Daniel, 17033 Neubrandenburg (DE)
(74) Representative: Bruglachner, Thomas E.

(57) **Abstract**

A method and a device for data processing are provided, said method comprising the steps of (i) a first address associated with data is translated in a second address, wherein the second address comprises a unique identifier based on a source information; and (ii) wherein said data are forwarded using the second address. Furthermore, a communication system is suggested comprising said device.

## Description

The invention relates to a method and to a device for data processing and to a communication system comprising such a device.

In today's access networks that may contain IP-DSLAMs or GPONs, data is not merely conveyed via a point to point protocol (PPP) like PPP over Ethernet (PPPoE) through an authenticated tunnel. Hence, the data passed through an access node towards the subscribers cannot be deemed carrying unambiguous session data.

Such access networks increasingly support IP over Ethernet (IPoE), wherein a session is set up by a Dynamic Host Configuration Protocol (DHCP). Typically, this leads to a connection different from a PPP(oE) tunnel as any allocation or gathering of session data (e.g., IP addresses, lease intervals, etc.) in the access node is difficult without a definite tunnel or a particularly defined session. Address spaces comprising MAC addresses and/or IP addresses may thus overlap in addition to the risk of address information being modified by the end user. This is in particular delicate in case termination points are deployed outside of the access node, e.g., located at the customer's premises, where they may not be safe against tampering.

In addition, data conveyed via the network may comprise ambiguous address information such that routing information and/or session data may not be derived from such data in a reliable way. Hence, address information may not be utilized as a unique key for identification purposes. For example, if DHCP applies, an IP address information may be yet unknown or not yet assigned to a network element. Virtual LANs (VLANs) as well as MAC addresses can also not be considered unambiguous.

Besides the aforementioned address information, DHCP provides a transaction identifier (xid). This xid provides an arbitrary value that can be used to resolve address conflicts. By choosing the xid to be an "highly" arbitrary number, a chance of confusing address information can be reduced. However, the chance still remains larger than zero in particular as the xid is generated at the user's side.

Utilizing said xid, routing information (in particular conveying control points between users and network that may advantageously be realized in software) may in particular be derived from a key comprising the MAC address and the xid. Both such values are supplied from the user's side. Said tuple (MAC; xid) only reduces a probability of a collision. However, the risk of a collision cannot be excluded.

Such risk even increases as solutions like IP-DSLAM or GPON utilize virtual routing by communicating with several DHCP servers on the network side. Hence, additional tuples (MAC; xid) lead to a higher risk for a collision in particular as the standard allows re-using xids for different connections.

The remaining significant risk of a collision is not acceptable in the field of carrier-grade solutions.

The problem to be solved is to overcome the disadvantages stated above and in particular to provide a reliable and trustworthy approach to determine routing information and/or allocation information in an access system.

This problem is solved according to the features of the independent claims. Further embodiments result from the depending claims.

In order to overcome this problem, a method for data processing is provided comprising the steps:
- a first address associated with data is translated in a second address, wherein the second address comprises a unique identifier based on a source information;
- wherein said data are forwarded using the second address.

Advantageously, this approach allows in particular mapping of an address to a trustworthy and (at least partially unambiguous) address that can be utilized for forwarding data packets throughout a network. It is another advantage that due to its uniqueness, collisions at the access node can be avoided.

It is noted that the "unique identifier" may be unique to the operator of, e.g., the access network (or a network portion in general). This unique identifier does not have to be globally unique beyond such scope.

The unique identifier may be or it may comprise a transaction identifier (xid). The identifier may in particular serve as an address information or as an address.

In an embodiment, the unique identifier is based on a source information of a subscriber line.

In another embodiment, the second address is utilized as a unique key by upper services.

Such upper service may be services using the data packet, in particular services located at (upper) layers of a protocol stack, in particular of an OSI-layer model.

In a further embodiment, the second address comprises at least one of the following:
- the first address;
- a transaction identifier;
- a random number;
- an identifier of a system;
- an identifier of an access node.

In a next embodiment, the first address is stored together or associated with the second address.

It is also an embodiment that the first address is stored in a table or in a database.

Pursuant to another embodiment, the second address associated with data received is back-translated into the first address and said data are forwarded using the first address.

According to an embodiment, the approach provided in particular runs with or at an access node, in particular for each subscriber port of the access node.

According to another embodiment, the access node connects at least one user device, in particular at least one CPE, with a network.

In yet another embodiment, the second address is used towards the network.

According to a next embodiment, the method can be utilized in upstream and/or in downstream direction.

Pursuant to yet an embodiment, the first address associated with said data is translated in a second address only if the first address is not unique.

Hence, the access node may not translate any address in case it is considered unique. Only such addresses are translated that may interfere with each other.

It is also an embodiment that the second address, e.g., an identifier such as xid, is determined by utilizing a DHCP-82 option or a MAC address translation.

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with a central office or digital subscriber line access multiplexer or any access node.

The problem stated supra is further solved by a communication system comprising the device as described herein.

Embodiments of the invention are shown and illustrated in the following figures:
- Fig.1: shows an exemplary scenario of an access node that is connected to at least one customer premises equipment via one subscriber interface and via one uplink interface to an IP Network and further to DHCP servers;
- Fig.2: shows a flow chart comprising steps of generating such unique address information;
- Fig.3: shows a flow chart comprising steps of translating an address in upstream direction;
- Fig.4: shows a flow chart comprising steps of translating an address in downstream direction.

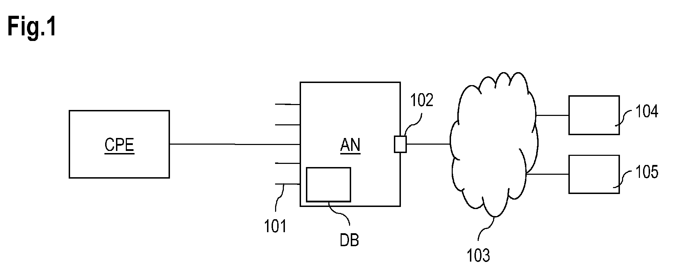

**Fig.1** shows an exemplary scenario of an access node AN that is connected to at least one customer premises equipment CPE via one subscriber interface 101 and via one uplink interface 102 to an IP Network 103 and further to DHCP servers 104 and 105. The access node AN further comprises a database DB for storing/accessing information, in particular session-related data that are generated or derived. It is noted that the access node AN may be and/or comprise an DSLAM and/or a GPON.

The approach described provides trustworthy as well as unique address information in particular by utilizing source information of a subscriber line which is available in the system. Such source information is processed to generate an identifier which is unique throughout the system, in particular within the access system of an operator.

Hence, in particular the operator can be sure that the identifier is unique and trustworthy within the operator's sphere.

There are preferably no restrictions regarding an implementation at the user's side. Hence, the approach can cope with legacy equipment.

This unique identifier may preferably generated within the access node. The unique identifier is used in messages passing the access node. This can be done by replacing the old identifier (e.g., old address) with the unique identifier (e.g., new address) in one direction and replacing the unique identifier with the old identifier when messages are to be forwarded in the opposite direction.

Generating the unique identifier may consider the following concepts and/or mechanisms (also combinations thereof are possible):
(a) MAC Address Translation (MAT);
(b) Utilizing of a DHCP-Option 82: The value provided (which can be defined according to said option 82) may allow or comprise routing services/information in addition to the unique identifier. As the option 82 allows free definition of contents, the interpretation may be done at the access node as well.
(c) An according scheme for processing/translating the xid can be stored with the access node.

As an example, xid processing is described in more detail hereinafter.

There are no restrictions regarding any generation of xid values at the user's side. For routing purposes as well as for storing and accessing session-related information the tuple comprising the MAC address and the xid can be used further on.

The approach provided allows utilization of the xid as single value. Advantageously, actual xid values are known throughout the system. This can be achieved, by providing and maintaining a list of xid values for the system. For each subscriber port an additional random number is generated, which random number has not yet appeared as xid value (e.g., has not been occurred in the list of xid values). This random number can be considered the new address information. The previous xid value of a DHCP packet received at the access node is stored together with the new address information for later back-translation purposes. The new address information is inserted to said DHCP packet and the amended DHCP packet is processed and/or forwarded. As the access node is responsible for generating (unique) address information, the operator running said access node can ensure that all DHCP traffic supplied to/from all CPEs has a unique source and/or destination address. In particular, the address information generated can be considered as unambiguous key to services and/or upper layers of a protocol stack.

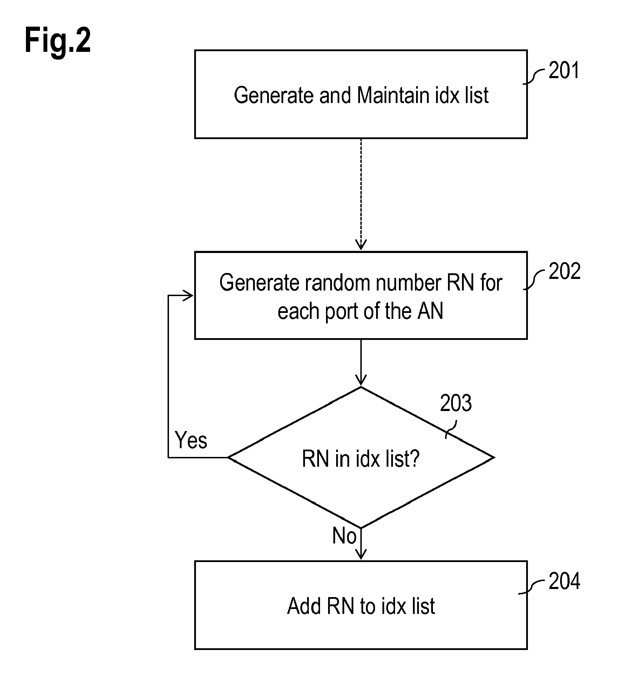

**Fig.2** shows a flow chart comprising steps of generating such unique address information. In a step 201 a list or database comprising xid values may already be set up and maintained. Such list can be made available to several access nodes (of one more operator(s)).

In a step 202 the actual access node generates a random number for each of its ports and checks in a step 203 whether such random number is already allocated in said list. In the affirmative, the access node generates another random number (branch to step 202). If the actual random number is not used, it is added to the list in a step 204.

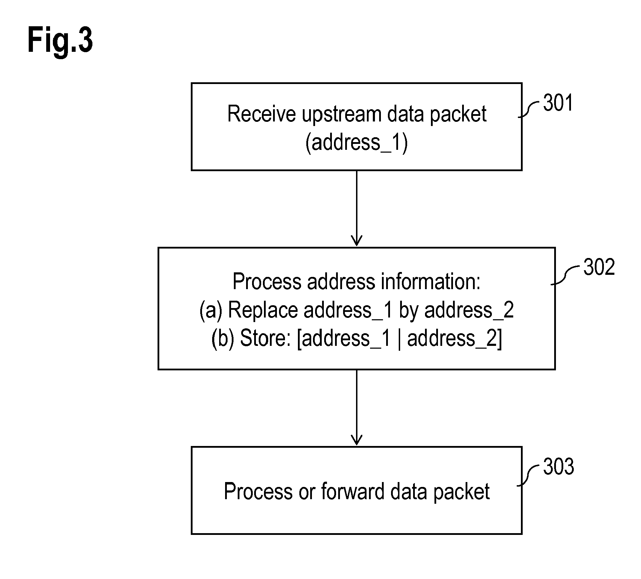

**Fig.3** shows a flow chart comprising steps of translating an address in upstream direction.

In a step 301 a data packet is received comprising an address "address_1". In a subsequent step 302, the access node replaces said address "address_1" by a unique and trustworthy address "address_2" and stores the association "address_1; address_2" of both addresses in a table or database. The data packet comprising address_2 is processed and/or forwarded in upstream direction (see step 303). It is noted, however, that said unique and trustworthy address "address_2" can be generated in various ways.

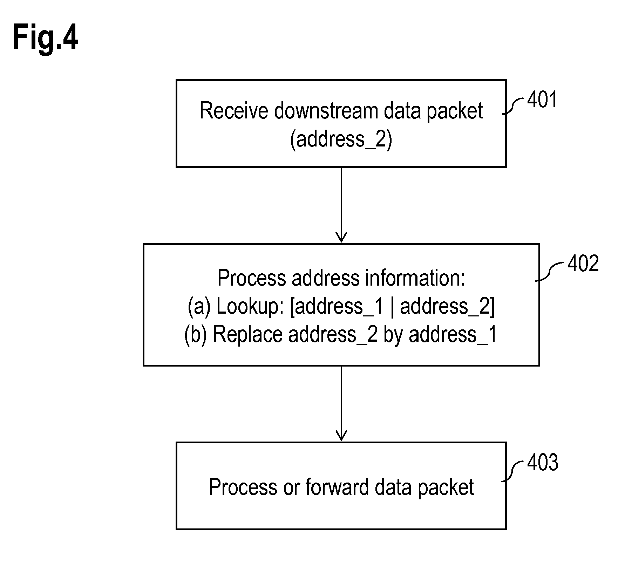

**Fig.4** shows a flow chart comprising steps of translating an address in downstream direction.

In a step 401 a data packet is received by the access node, said data packet comprising the address "address_2". In a step 402, the access node processes the address information by looking up the address received in its list or database thereby revealing the list entry "address_1; address_2" indicating that the "address_2" received is to be replaced by "address_1". The access node replaces the address and processes or forwards the data packet in a step 403.

It is noted, however, that the xid value and the modification thereof is just one example of processing or generating a unique key. However, there are various possibilities even without considering said xid value at all. In addition, determining a unique address or key may comprise generating a structure, e.g., utilizing a predefined number of bits as access node identifier and adding a random portion. This allows determining not only the uniqueness of the message, but also identifying the access node processing said message. Such approach may reduce the available range of values, which may in particular not be significant as the lifespan of such value generated may amount to several seconds only.

It is further noted that the unique address information generated is deleted in the list or table after it expires, in particular after the response to a message is received.

It is a further option of this approach to only generate said random number in case of a collision. Hence, if the address information received is not used in a list or database, there may be no need for generating, replacing and storing another address information. This bears the advantage of reduced processing requirements. In addition, trustworthiness of the address information still is provided as the access node checks and maintains the address information.

It is also an option that even in case of a downstream message that is broadcast towards several subscriber devices, the access node allows to individually identify each subscriber device (CPE) as each of the access node's ports is associated with a particular subscriber device.

It is another advantage of the approach provided that there are no further restrictions to or requirements regarding the hardware. The approach can be implemented and deployed by software (modification). Hence, the approach provided is compliant with standard solutions and compatible with existing components.

### List of Abbreviations:

- AN: Access Node
- CPE: Customer Premises Equipment
- DB: Database
- DHCP: Dynamic Host Configuration Protocol
- DSL: Digital Subscriber Line
- DSLAM: Digital Subscriber Line Access Multiplexer
- GPON: Gigabit Passive Optical Network
- IP: Internet Protocol
- IPoE: IP over Ethernet
- LAN: Local Area Network
- MAC: Media Access Control
- MAT: MAC Address Translation
- NW: Network
- PPP: Point-to-Point
- PPPoE: PPP over Ethernet
- VLAN: Virtual LAN
- xid: transaction identifier

## Claims

1. A method for data processing comprising the steps:
- a first address associated with data is translated in a second address, wherein the second address comprises a unique identifier based on a source information;
- wherein said data are forwarded using the second address.

2. The method according to any of the preceding claims, wherein the unique identifier is based on a source information of a subscriber line.

3. The method according to any of the preceding claims, wherein the second address is utilized as a unique key by upper services.

4. The method according to any of the preceding claims, wherein the second address comprises at least one of the following:
- the first address;
- a transaction identifier;
- a random number;
- an identifier of a system;
- an identifier of an access node.

5. The method according to any of the preceding claims, wherein the first address is stored together or associated with the second address.

6. The method according to claim 5, wherein the first address is stored in a table or in a database.

7. The method according to any of the preceding claims, wherein the second address associated with data received is back-translated into the first address and said data are forwarded using the first address.

8. The method according to any of the preceding claims processed with or at an access node, in particular for each subscriber port of the access node.

9. The method according to claim 8, wherein the access node connects at least one user device, in particular at least one CPE, with a network.

10. The method according to claim 9, wherein the second address is used towards the network.

11. The method according to any of the preceding claims used in upstream and/or in downstream direction.

12. The method according to any of the preceding claims, wherein the first address associated with said data is translated in a second address only if the first address is not unique.

13. The method according to claim 1, wherein the second address is determined by utilizing a DHCP-82 option or a MAC address translation.

14. A device comprising a and/or being associated with a processor unit and/or a hard-wired circuit and/or a logic device that is arranged such that the method according to any of the preceding claims is executable thereon.

15. The device according to claim 14, wherein said device is a communication device, in particular a or being associated with a central office or digital subscriber line access multiplexer or any access node.

16. Communication system comprising the device according to any of claims 14 or 15.
